# EUROPEAN PATENT APPLICATION

(11) **EP 2 806 343 A2**
(43) Date of publication of application: **26.11.2014**
(21) Application number: 12768545.1
(22) Date of filing: 13.06.2012
(51) Int. Cl.: G06F 3/048

(54) **METHOD AND UE FOR INFORMATION SEARCH**

(30) Priority: 29.02.2012 CN 201210050096
(71) Applicant: Huawei Device Co., Ltd., Longgang District Shenzhen Guangdong 518129 (CN)
(72) Inventor: WEI, Konggang, Shenzhen Guangdong 518129 (CN); SHAN, Haibo, Shenzhen Guangdong 518129 (CN); CHEN, Wenhao, Shenzhen Guangdong 518129 (CN)
(74) Representative: Körber, Martin Hans
(86) International application number: PCT/CN2012/076813
(87) International publication number: WO 2012/136164

(57) **Abstract**

Embodiments of the present invention disclose an information searching method and a terminal, and relate to the field of communications technologies, which addresses a problem of operation inconvenience in an information searching process. The method includes: displaying, after a user triggers a target letter in a letter index area, information summarized by the target letter in an information display area, where the letter index area is used to display an initial of an index, and the information display area is used to display information to be searched for; and receiving a first specified operation triggered by the user and locking the information displayed in the information display area, so that after the information display area receives a page-turning operation triggered by the user, the information display area performs display switching only within the range of currently displayed information. With the technical solutions provided in the embodiments of the present invention, after a user selects a target letter, information displayed in an information display area can be locked, thereby avoiding the occurrence of a misoperation when the user selects target information in the information display area.

## Description

### CROSS-REFERENCE TO RELATED APPLICATIONS

This application claims priority to Chinese Patent Application NO. CN 201210050096.3, filed with the Chinese Patent Office on February 29, 2012 and entitled "INFORMATION SEARCHING METHOD AND TERMINAL", which is incorporated herein by reference in its entirety.

### TECHNICAL FIELD

The present invention relates to the field of communications technologies, and in particular, to an information searching method and a terminal.

### BACKGROUND

With continuous development of communications technologies, a terminal is becoming increasingly powerful and can store more and more information, such as contact information or file information. An increase in information brings much inconvenience for information searching. Searching for contact information stored in a terminal is used as an example. There are various manners of searching for a contact in a terminal having an address book. The following is a commonly-used and user-friendly searching manner at present.

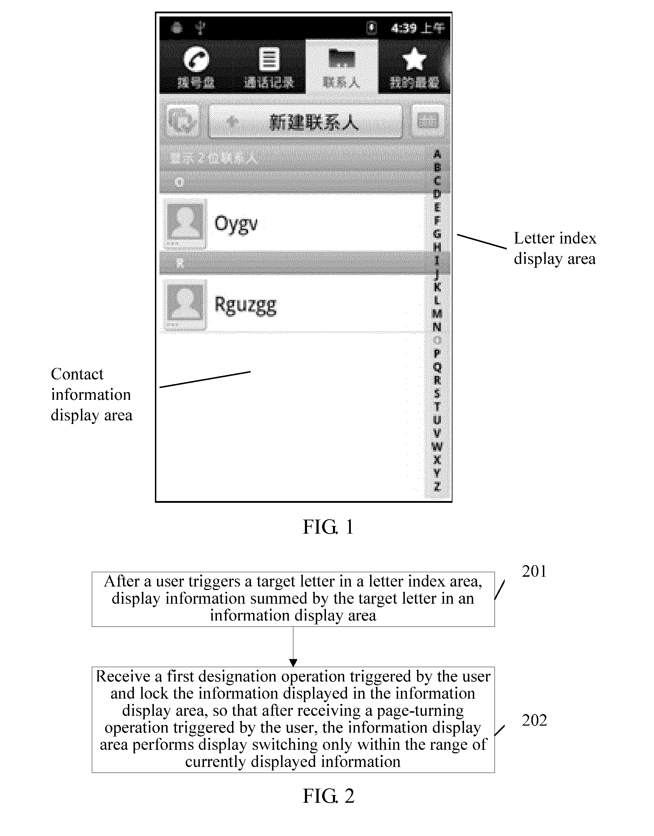

As shown in FIG. 1, the middle and left areas of a screen are a contact information display area, and the right area is a letter index area. When a finger stays on a target letter in the letter index area, the system searches for information, in the address book, about the first contact which takes the target letter as an initial, and performs, starting from the information about the contact, displaying in the contact information display area. The finger may move away from the target letter, and a target contact can be searched for in the contact information display area.

In a process of implementing the foregoing contact searching, the inventor finds that at least the following problem exists in the prior art: When a target contact is selected in a contact information display area, if a finger touches another letter in a letter index area by accident, a target letter needs to be reselected in the letter index area, which brings much inconvenience for the operation.

### SUMMARY

Embodiments of the present invention provide an information searching method and a terminal, addressing a problem of operation inconvenience in an information searching process.

To achieve the foregoing objective, the following technical solutions are adopted in the embodiments of the present invention:
an information searching method, including:
   displaying, after a user triggers a target letter in a letter index area, information summarized by the target letter in an information display area, where the letter index area is used to display index letters, and the information display area is used to display information to be searched for; and
   receiving a first specified operation triggered by the user and locking the information displayed in the information display area, so that after the information display area receives a page-turning operation triggered by the user, the information display area performs display switching only within the range of currently displayed information; and
a terminal, including:
   a first displaying unit, configured to, after a user triggers a target letter in a letter index area, display information summarized by the target letter in an information display area, where the letter index area is used to display index letters, and the information display area is used to display information to be searched for; and
   a locking unit, configured to receive a first specified operation triggered by the user and lock the information displayed in the information display area, so that after the information display area receives a page-turning operation triggered by the user, the information display area performs display switching only within the range of currently displayed information.

With the technical solutions provided in the embodiments of the present invention, after a user selects a target letter, information displayed in an information display area can be locked. This avoids the occurrence of an unnecessary operation of reselecting the target letter in a letter index area because a finger touches another index letter by accident when the user selects target information in the information display area, which makes an operation more humanized.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an information searching method on a display interface of a terminal in the prior art;
FIG. 2 is a flowchart of an information searching method according to an embodiment of the present invention;
FIG. 3 is a flowchart of another information searching method according to an embodiment of the present invention;
FIG. 4 is a structural diagram of a terminal according to an embodiment of the present invention; and
FIG. 5 is a structural diagram of another terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

An embodiment of the present invention provides an information searching method, as shown in FIG. 2, including the following steps:

201. After a user triggers a target letter in a letter index area, display information summarized by the target letter in an information display area.

When the user needs to search for information, the user may first find, in the letter index area, a target letter corresponding to target information. The user triggers the target letter, and the information summarized by the target letter is displayed piece by piece in the information display area, where the letter index area is used to display index letters, and the information display area is used to display information to be searched for.

The information summarized by the target letter, according to different information to be searched for and different searching policies, may be information whose initial is the target letter, may also be information whose filename contains the target letter, and may also be information whose file contains the target letter. This embodiment of the present invention does not limit thereto.

202. Receive a first specified operation triggered by the user and lock the information displayed in the information display area, so that after the information display area receives a page-turning operation triggered by the user, the information display area performs display switching only within the range of currently displayed information.

When the user only needs to search within the range of the information summarized by the target letter, the user may trigger the first specified operation, so as to lock the content displayed in the information display area, so that the information displayed in the information display area is only limited to the information summarized by the target letter, making it convenient for the user to search for the target information.

According to the information searching method provided in this embodiment, after a user triggers a target letter in a letter index area, information summarized by the target letter is displayed in an information display area; and after a first specified operation triggered by the user is received, the information displayed in the information display area is locked, so that after the information display area receives a page-turning operation triggered by the user, the information display area performs display switching only within a range currently displayed. This avoids the occurrence of an unnecessary operation of reselecting the target letter in the letter index area because a finger touches another index letter by accident when the user selects target information in the information display area, which makes an operation more humanized.

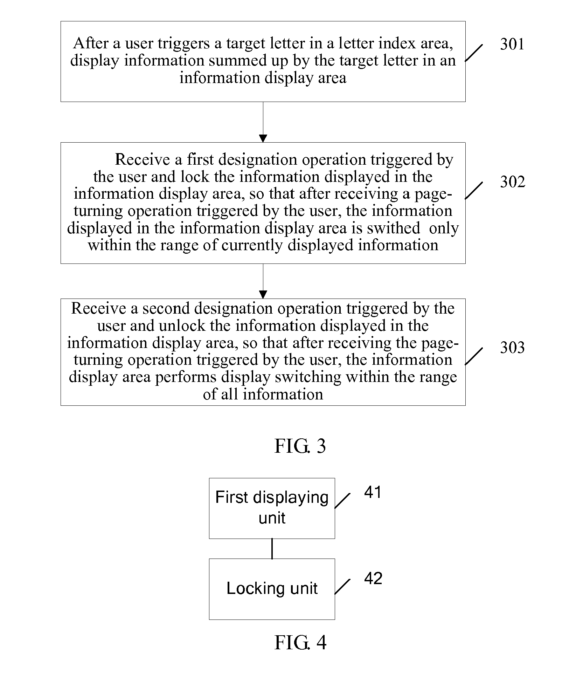

As an improvement of this embodiment, an embodiment of the present invention provides another information searching method, as shown in FIG. 3, including the following steps:

301. After a user triggers a target letter in a letter index area, display information summarized by the target letter in an information display area.

Searching for contact information in a mobile phone, such as a mobile phone using an Android system, is used as an example for description in this embodiment. As shown in FIG. 1, when a contact is being searched for, a mobile phone interface includes a letter index area and a contact information display area, where the information summarized by the target letter in this embodiment may refer to information about a contact whose initial is the target letter.

When the user needs to search for a contact, the user may first find an initial of a target contact, that is, the target letter, in the letter index area, and the user triggers the target letter. Optionally, when the user triggers the target letter in the letter index area, in the contact information display area, the target letter is zoomed in at the same time; when the user triggers the target letter in the letter index area, and after the user triggers the target letter in the letter index area, information about a contact whose initial is the target letter is displayed in the contact information display area, where the letter index area is used to display index letters of a contact, and the contact information display area is used to display information about a contact to be searched for.

302. Receive a first specified operation triggered by the user and lock the information displayed in the information display area, so that after the information display area receives a page-turning operation triggered by the user, the information display area performs display switching only within the range of currently displayed information.

When the user only needs to search within the range of contacts who take the target letter as an initial, the user may trigger the first specified operation to lock the content displayed in the contact information display area of a mobile phone screen, so that the contact information displayed in the contact information display area is only limited to the information about the contacts who take the target letter as the initial, so as to make it convenient for the user to search for the target contact and reduce repetitive operations caused by a misoperation. Even if the misoperation occurs, the content displayed in the contact information display area is transformed only within the contacts who take the target letter as the initial.

The first specified operation may be at least one of the following operations: double tapping the target letter, and touching and holding the target letter. That is, when triggering the target letter in the letter index area, the user double taps the target letter, touches and holds the target letter, or touches and holds the target letter while double tapping the target letter. Optionally, in a case in which the target letter is zoomed in at the same time in the contact information display area when the user triggers the target letter in the letter index area, the first specified operation may also be at least one of the following operations: when the user triggers the target letter in the letter index area, tapping the target letter zoomed in, double tapping the target letter zoomed in, and touching and holding the target letter zoomed in.

303. Receive a second specified operation triggered by the user and unlock the information displayed in the information display area, so that after the information display area receives the page-turning operation triggered by the user, the information display area performs display switching within the range of all information.

If the user wants to release a lock and expand a search scope, the user may perform the second specified operation. The mobile phone receives the second specified operation triggered by the user and unlocks the content displayed in the contact information display area, so that after the contact information display area receives the page-turning operation triggered by the user, the contact information display area performs display switching within the range of all contact information.

The second specified operation may be at least one of the following operations: double tapping the letter index area or any blank area, and touching and holding the letter index area or any blank area.

According to the information searching method provided in this embodiment, after a user triggers a target letter in a letter index area, information summarized by the target letter is displayed in an information display area; and a first specified operation triggered by the user is received, and the information displayed in the information display area is locked, so that after the information display area receives a page-turning operation triggered by the user, the information display area performs display switching only within the range of currently displayed information. This avoids the occurrence of an unnecessary operation of reselecting the target letter in the letter index area because a finger touches another index letter by accident when the user selects target information in the information display area, which makes an operation more humanized.

A type of a terminal is not limited in this embodiment of the present invention, and may be a mobile terminal, such as a mobile phone and a computer tablet.

An embodiment of the present invention further provides a terminal, as shown in FIG. 4, including a first displaying unit 41 and a locking unit 42.

The first displaying unit 41 is configured to, after a user triggers a target letter in a letter index area, display information summarized by the target letter in an information display area, where the letter index area is used to display index letters, and the information display area is used to display information to be searched for.

The locking unit 42 is configured to receive a first specified operation triggered by the user and lock the information displayed in the information display area, so that after the information display area receives a page-turning operation triggered by the user, the information display area performs display switching only within the range of currently displayed information.

According to the terminal provided in this embodiment, after a user triggers a target letter in a letter index area, a first displaying unit displays information summarized by the target letter in an information display area; a locking unit receives a first specified operation triggered by the user and locks information displayed in the information display area, so that after the information display area receives a page-turning operation triggered by the user, the information display area performs display switching only within the range of currently displayed information. This avoids the occurrence of an unnecessary operation of reselecting the target letter in the letter index area because a finger touches another index letter by accident when the user selects target information in the information display area, which makes an operation more humanized.

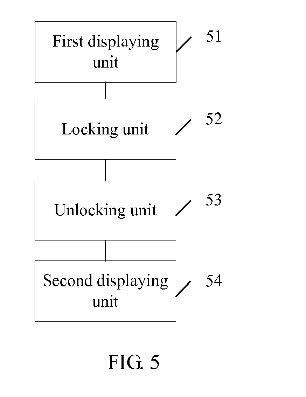

As an improvement of this embodiment, an embodiment of the present invention further provides another terminal, as shown in FIG. 5, including a first displaying unit 51, a locking unit 52, and an unlocking unit 53.

The first displaying unit 51 is configured to, after a user triggers a target letter in a letter index area, display information summarized by the target letter in an information display area, where the letter index area is used to display index letters of information, and the information display area is used to display information to be searched for.

The locking unit 52 is configured to receive a first specified operation triggered by the user and lock the information displayed in the information display area, so that after the information display area receives a page-turning operation triggered by the user, the information display area performs display switching only within the range of currently displayed information.

Specifically, the first specified operation received by the locking unit may include at least one of the following operations: double tapping the target letter, and touching and holding the target letter.

The unlocking unit 53 is configured to receive a second specified operation triggered by the user and unlock the information displayed in the information display area, so that after the information display area receives the page-turning operation triggered by the user, the information display area performs display switching within the range of all information.

Specifically, the second specified operation received by the unlocking unit may include at least one of the following operations: double tapping the letter index area or any blank area, and touching and holding the letter index area or any blank area.

Optionally, the terminal may further contain:
a second displaying unit 54, configured to zoom in the target letter in the information display area when the user triggers the target letter in the letter index area.

In a case in which the second displaying unit is contained, the first specified operation received by the locking unit includes at least one of the following operations: tapping the target letter zoomed in, double tapping the target letter zoomed in, and touching and holding the target letter zoomed in.

According to the terminal provided in this embodiment, after a user triggers a target letter in a letter index area, a displaying unit displays information summarized by the target letter in an information display area; a locking unit receives a first specified operation triggered by the user and locks the information displayed in the information display area, so that after the information display area receives a page-turning operation triggered by the user, the information display area performs display switching only within the range of currently displayed information. This avoids the occurrence of an unnecessary operation of reselecting the target letter in the letter index area because a finger touches another index letter by accident when the user selects target information in the information display area, which makes an operation more humanized.

Based on the foregoing descriptions of the embodiments, a person skilled in the art may clearly understand that the present invention may be implemented by software in addition to necessary universal hardware or by hardware only. In most circumstances, the former is a preferred implementation manner. Based on such an understanding, the technical solutions of the present invention essentially or the part contributing to the prior art may be implemented in a form of a software product. The software product is stored in a readable storage medium, such as a floppy disk, a hard disk, or an optical disc of a computer, and includes several instructions for instructing a computer device (which may be a personal computer, a server, a network device, or the like) to perform the methods described in the embodiments of the present invention.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An information searching method, comprising:
displaying, after a user triggers a target letter in a letter index area, information summarized by the target letter in an information display area, wherein the letter index area is used to display index letters, and the information display area is used to display information to be searched for; and
receiving a first specified operation triggered by the user and locking the information displayed in the information display area, so that after the information display area receives a page-turning operation triggered by the user, the information display area performs display switching only within the range of currently displayed information.

2. The information searching method according to claim 1, wherein the first specified operation comprises at least one of the following operations: double tapping the target letter, and touching and holding the target letter.

3. The information searching method according to claim 1 or 2, wherein when the user triggers the target letter in the letter index area, the method further comprises:
zooming in the target letter in the information display area; and
the first specified operation comprises at least one of the following operations: tapping the target letter zoomed in, double tapping the target letter zoomed in, and touching and holding the target letter zoomed in.

4. The information searching method according to any one of claims 1 to 3, wherein the method further comprises:
receiving a second specified operation triggered by the user and unlocking the information displayed in the information display area, so that after the information display area receives the page-turning operation triggered by the user, the information display area performs display switching within the range of all information.

5. The information searching method according to claim 4, wherein the second specified operation comprises at least one of the following operations: double tapping the letter index area or any blank area, and touching and holding the letter index area or any blank area.

6. A terminal, comprising:
a first displaying unit, configured to, after a user triggers a target letter in a letter index area, display information summarized by the target letter in an information display area, wherein the letter index area is used to display index letters, and the information display area is used to display information to be searched for; and
a locking unit, configured to receive a first specified operation triggered by the user and lock the information displayed in the information display area, so that after the information display area receives a page-turning operation triggered by the user, the information display area performs display switching only within the range of currently displayed information.

7. The terminal according to claim 6, wherein the first specified operation received by the locking unit comprises at least one of the following operations: double tapping the target letter, and touching and holding the target letter.

8. The terminal according to claim 6 or 7, further comprising:
a second displaying unit, configured to zoom in the target letter in the information display area when the user triggers the target letter in the letter index area; and
for a terminal containing the second displaying unit, the first specified operation received by the locking unit comprises at least one of the following operations: tapping the target letter zoomed in, double tapping the target letter zoomed in, and touching and holding the target letter zoomed in.

9. The terminal according to any one of claims 6 to 8, wherein the terminal further comprises:
an unlocking unit, configured to receive a second specified operation triggered by the user and unlock the information displayed in the information display area, so that after the information display area receives the page-turning operation triggered by the user, the information display area performs display switching within the range of all information.

10. The terminal according to claim 9, wherein the second specified operation received by the unlocking unit comprises at least one of the following operations: double tapping the letter index area or any blank area, and touching and holding the letter index area or any blank area.
